# EUROPÄISCHE PATENTSCHRIFT

(11) **EP 3 288 743 B1**
(45) Veröffentlichungstag und Bekanntmachung des Hinweises auf die Patenterteilung: **10.07.2019**
(21) Anmeldenummer: 16725509.0
(22) Anmeldetag: 25.05.2016
(51) Int. Cl.: B29C 67/24, B29B 13/02, B29C 39/24, B29B 7/74

(54) **MISCHVORRICHTUNG UND VERFAHREN ZUM MISCHEN VON REAKTIVEN KUNSTSTOFFKOMPONENTEN**
METHOD AND DEVICE FOR MIXING REACTIVE PLASTIC COMPONENTS
DISPOSITIF ET PROCÉDÉ PERMETTANT DE MÉLANGER DES COMPOSANTS DE MATIÈRE PLASTIQUE RÉACTIFS

(30) Priorität: 18.06.2015 DE 102015109770
(43) Veröffentlichungstag der Anmeldung: 07.03.2018
(73) Patentinhaber: KraussMaffei Technologies GmbH, 80997 München (DE)
(72) Erfinder: RENKL, Josef, 85229 Markt Indersdorf (DE)
(74) Vertreter: Roider, Stephan
(86) Internationale Anmeldenummer: PCT/EP2016/061767
(87) Internationale Veröffentlichungsnummer: WO 2016/202541

(56) Entgegenhaltungen:
- EP-A1- 2 572 851
- WO-A1-2015/082728
- GB-A- 1 249 217
- US-A- 2 217 743
- US-A- 2 374 069

## Beschreibung

### Technisches Gebiet

Die vorliegende Erfindung betrifft eine Mischanordnung zum Mischen von reaktiven Kunststoffkomponenten mit einer Schmelzvorrichtung zum Schmelzen von schmelzbarem Kunststoffmaterial gemäß dem Oberbegriff des Anspruchs 1. Des Weiteren betrifft die Erfindung ein Verfahren zum Mischen von reaktiven Kunststoffkomponenten.

### Stand der Technik

Im Bereich der Kunststoffteileherstellung sind diverse Anlagen und Verfahren bekannt. So können beispielsweise von den Rohstoffherstellern schuppen-, granulat- oder pulverförmig gelieferte Rohstoffe in einer Plastifizierschnecke aufgeschmolzen und dann unmittelbar in eine Kavität eines Werkzeugs eingespritzt werden, dort auskühlen und aushärten. Andererseits gibt es auch Kunststoffkomponenten, die vor der Kavität oder in der Kavität vermischt werden und dort zu einem Kunststoffteil ausreagieren. Im letzteren Fall wird die Hauptkomponente, beispielsweise Caprolactam, meist je zur Hälfte in zwei Behältern geben und in dem einen Behälter ein Katalysator und in dem anderen Behälter ein Aktivator zugemischt. Ein dosiertes Vermischen dieser Vormischungen zu einer reaktionsfähigen Schmelze erfolgt dann in einem gemeinsamen Mischkopf.

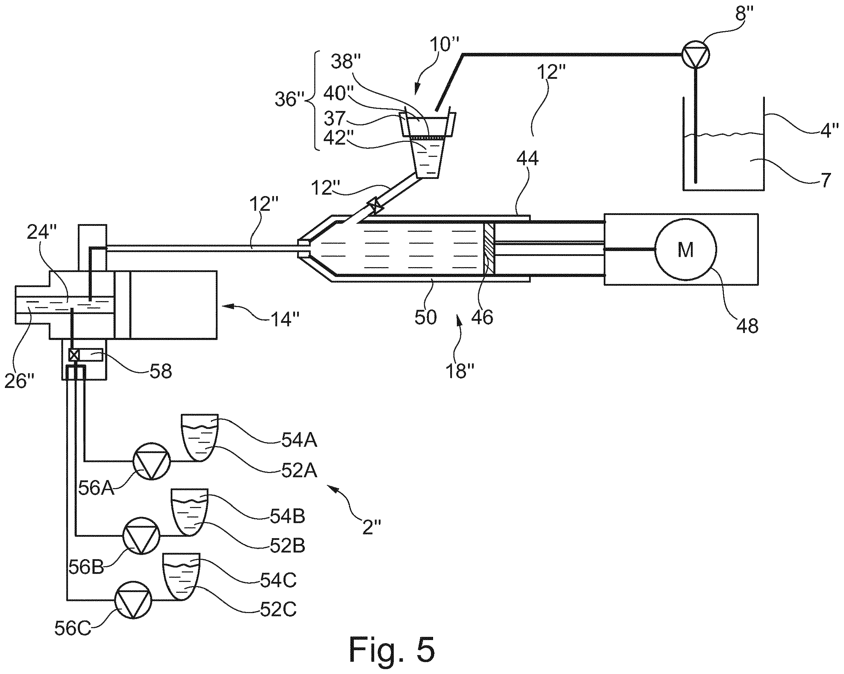

Die Komponenten müssen zur Verarbeitung verflüssigt werden, um diese dosieren, injizieren, auftragen usw. zu können. Bei diesen bekannten Anlagen werden meist große Behälter, sog. Tagesbehälter, verwendet, in denen die zumindest zwei Grundkomponenten aufgeschmolzen und im flüssigen Zustand bereitgehalten werden und über Pumpen zu den Kavitäten geführt werden (siehe Fig. 5). Nachteilig dabei ist, dass die einzelnen Komponenten oft sehr lange in den großen Behältern verbleiben, wodurch deren Qualität und somit die Reaktionsfähigkeit nachlassen kann. Gerade die mit dem Katalysator versehene Kunststoffkomponente bereitet hierbei Probleme und macht eine kurzfristige Verarbeitung des Materials notwendig. Die aufgeschmolzenen Rohstoffe müssen daher komplett innerhalb einer vorbestimmten Zeit verarbeitet werden und die Tagesbehälter müssen leer gefahren werden, bevor die nächste Menge an rieselförmigem Material zugeführt und aufgeschmolzen wird. Ferner müssen große Mengen an den Kunststoffkomponenten über eine lange Zeit im flüssigen Zustand gehalten werden bzw. muss der Tagesbehälter ständig am "Köcheln" gehalten werden. Das erneute Ansetzen und Aufschmelzen der Kunststoffkomponenten benötigt sehr viel Zeit, in welcher Zeit der Betrieb der Maschine oder die nachgelagerten Verarbeitungsprozesse zur Kunststoffteileherstellung im Wesentlichen stillstehen. Dadurch lässt sich somit kein Zwei- oder Dreischicht-Betrieb realisieren.

Beispielhafter Stand der Technik ist aus der EP 2 572 851 A1, der US 2 217 743 A sowie der US 2 374 069 A bekannt.

### Offenbarung der Erfindung

Aufgabe der vorliegenden Erfindung ist es somit, eine Mischanordnung zum Mischen von reaktiven Kunststoffkomponenten bereitzustellen, welche eine flexiblere Bereitstellung der Kunststoffkomponenten im aufgeschmolzenen bzw. gemischten Zustand ermöglichen.

Diese Aufgabe wird durch die Merkmale des Anspruchs 1 gelöst. Vorteilhafte Weiterbildungen sind jeweils Gegenstand von Unteransprüchen.

Die in der erfindungsgemäßen Mischanordnung enthaltene Schmelzvorrichtung für schmelzbares (Kunststoff-)Material weist einen Behälter (oder Behältergruppe) auf, in dem im rieselförmigen (granulatförmigen, schuppenförmigen, pulverförmigen oder in einer ähnlichen Form) Zustand zugeführtes, schmelzbares Material aufgeschmolzen und im flüssigen Zustand bevorratet werden kann. Der Behälter weist ferner einen ersten Bevorratungsabschnitt zum Bevorraten des schmelzbaren Materials im rieselfähigen Zustand, einen zweiten Bevorratungsabschnitt zum Bevorraten des aufgeschmolzenen Materials im flüssigen Zustand und einen zwischen dem ersten Bevorratungsabschnitt und dem zweiten Bevorratungsabschnitt vorgesehenen Trennabschnitt auf. Der Trennabschnitt ist derart konfiguriert, dass er das Material bzw. die Kunststoffkomponente im nicht aufgeschmolzenen oder rieselförmigen Zustand zurückhält und im aufgeschmolzenen oder flüssigen Zustand von dem ersten Bevorratungsabschnitt in den zweiten Bevorratungsabschnitt passieren lässt. Die Mischanordnung weist ferner eine Mischkammer, in welcher die reaktiven Kunststoffkomponenten miteinander zu einem reaktiven Gemisch vermischbar sind, eine erste Dosier- und Zuführvorrichtung zum Zuführen eines rieselförmigen Ausgangsmaterials zu der zumindest einen Schmelzvorrichtung und eine zweite Dosier- und/oder Zuführvorrichtung zum dosierten Zuführen zumindest der in der zumindest einen Schmelzvorrichtung aufgeschmolzenen Kunststoffkomponente zu der Mischkammer auf. Erfindungsgemäß sind die erste Dosier- und Zuführvorrichtung und die zweite Dosier- und Zuführvorrichtungen derart aufeinander abgestimmt, dass in der Schmelzvorrichtung lediglich eine vorbestimmte Menge an schmelzbarem Material aufgeschmolzen wird, welche dem unmittelbaren Bedarf an dieser Kunststoffkomponente entspricht, vorzugsweise auf eine vorbestimmte Anzahl, insbesondere 2 bis 10, bevorzugt 5, von nachgelagerten Kunststoffverarbeitungsvorgängen begrenzt ist oder innerhalb einer vorbestimmten Zeit, insbesondere kleiner gleich 30 Minuten, vorzugsweise kleiner gleich 15 Minuten, verarbeitet werden soll.

Durch das Aufteilen des Behälters in zwei Bevorratungsabschnitte oder Kammern kann die Kunststoffkomponente in ihren beiden Aggregatszuständen, d.h. im rieselfähigen Zustand und im flüssigen Zustand, voneinander getrennt werden bzw. das Aufschmelzen des Materials und das Bevorraten des aufgeschmolzenen Materials im flüssigen Zustand funktional voneinander getrennt werden. Dies bedeutet, dass für das (erneute) Aufschmelzen des Materials der Behälter nicht zuerst leergefahren werden muss, sondern das Aufschmelzen des Materials in der ersten Kammer und die Entnahme des flüssigen Materials aus der zweiten Kammer parallel erfolgen können. Dadurch wird ein kontinuierlicher Betrieb ermöglicht, der auch einen Zwei-, Drei- oder Mehrschichtbetrieb zulässt.

Die erfindungsgemäße Mischanordnung ermöglicht jedoch auch einen sog. Stopand-Go-Betrieb, da aufgrund des Aufbaus der Schmelzvorrichtung jederzeit neues Material aufgeschmolzen werden kann, ohne dabei die nachgelagerten Verarbeitungsprozesse unterbrechen zu müssen, und somit zu jedem Zeitpunkt nur geringe Mengen an aufgeschmolzen Material in der Schmelzvorrichtung vorhanden sein muss. Somit kann die Schmelzvorrichtung jederzeit und sehr schnell leergefahren werden und die Maschine insgesamt gestoppt werden. Entsprechend kurz dauert auch wieder das Hochfahren der Maschine bzw. der Schmelzvorrichtung. Aufgrund der kleinen Menge in der zweiten Kammer wird diese auch entsprechend schnell verarbeitet, so dass keine zusätzliche Heizenergie notwendig ist, um das aufgeschmolzene Material im flüssigen Zustand zu halten bzw. zu "köcheln".

Durch die erfindungsgemäße Mischanordnung können somit die eingangs dargestellten Nachteile vermieden werden. So werden die langen Verweilzeiten in dem Behälter verkürzt, die Schmelzequalität somit hochgehalten und eine bedarfsgerechte Bereitstellung der Kunststoffkomponente ermöglicht. Ein weiterer Vorteil ist, dass sich die erfindungsgemäße Mischanordnung mit geringen Investitionskosten realisieren lässt.

Der Behälter ist vorzugsweise einstückig ausgebildet und hat zwei Kammern. Alternativ kann es sich auch um eine Gruppe von Behältern handeln, zwischen welchen der Trennabschnitt angeordnet ist.

Gemäß einem Aspekt der Erfindung kann der erste Bevorratungsabschnitt vertikal über dem zweiten Bevorratungsabschnitt angeordnet sein. Der Trennabschnitt kann ein Gitter mit einer Maschenweite oder eine Lochplatte mit einem Lochdurchmesser kleiner als die Korngröße des Materials im rieselförmigen Zustand sein.

Dies hat den Vorteil, dass das aufgeschmolzene Material von alleine bzw. schwerkraftbedingt von dem ersten Bevorratungsabschnitt in den zweiten Bevorratungsabschnitt fließt. Auf diese Weise kann eine Steuervorrichtung für die Betätigung bzw. das Öffnen und Schließen des Trennabschnitts, der auch als ein mechanisch betätigbare Barriere ausgebildet sein kann, eingespart werden.

Gemäß einem Aspekt der Erfindung kann der erste Bevorratungsabschnitt und/oder der Trennabschnitt mit einer Heizvorrichtung versehen und beheizbar sein, um das rieselförmige, schmelzbare Material, vorzugsweise kontinuierlich, aufzuschmelzen.

Durch entsprechende Ansteuerung der Heizvorrichtung kann eine vorbestimmte Menge des rieselförmigen Materials in dem ersten Bevorratungsabschnitt kurzzeitig zwischengelagert werden und bei Bedarf aufgeschmolzen werden. Die Integration der Heizvorrichtung in den Trennabschnitt bzw. das Trenngitter stellt dabei eine vorrichtungstechnisch sehr einfache und wirtschaftlich günstig realisierbare Lösung dar. Der Aufschmelzvorgang kann insbesondere kontinuierlich erfolgen. In diesem Fall kann die Steuerung der Menge an aufgeschmolzenen Material im Wesentlichen (mit etwas Zeitverzögerung) über die Zuführung des Materials zum ersten Bevorratungsabschnitt erfolgen.

Hierbei kann das Gitter oder die Lochplatte, wenn der Trennabschnitt als solches ausgebildet ist, selbst und/oder kann derjenige Behälterabschnitt, der den ersten Bevorratungsabschnitt definiert, beheizbar sein. Optional kann auch der gesamte Behälter, d.h. beide Bevorratungsabschnitte, beheizbar sein, um zu verhindern, dass die Temperatur des aufgeschmolzenen Materials im zweiten Bevorratungsabschnitt allzu sehr absinkt, z.B. für den Fall, dass die nachgelagerten Verarbeitungsvorgänge, z.B. zum Werkzeugwechsel, kurzzeitig unterbrochen werden müssen.

Gemäß einem Aspekt der Erfindung kann die Schmelzvorrichtung ferner einen ersten Zuführ- und Dosierabschnitt zum dosierten, insbesondere kontinuierlichen, Zuführen des schmelzbaren Materials im rieselförmigen Zustand in den ersten Bevorratungsabschnitt und/oder einen zweiten Zuführ- und Dosierabschnitt zum dosierten, insbesondere diskontinuierlichen, Abführen des aufgeschmolzenen Materials im flüssigen Zustand aus dem zweiten Bevorratungsabschnitt aufweisen.

Somit lässt sich die Menge an Kunststoffkomponenten im rieselförmigen bzw. flüssigen Zustand in der Schmelzeinrichtung über die beiden Zuführ- und Dosierabschnitte einstellen, wobei die Entnahme an Material aus der Schmelzvorrichtung je nach nachgelagertem Verarbeitungsverfahren auch diskontinuierlich erfolgen kann. Somit kann die Zuführung und die Entnahme des Materials unabhängig von einander gesteuert werden.

Gemäß einem Aspekt der Erfindung kann eine Füllstandmesseinrichtung, welche den Füllstand des in dem zweiten Bevorratungsabschnitt im flüssigen Zustand bevorrateten Materials misst vorgesehen sein. Ferner kann eine Steuervorrichtung, welche die Zuführung des schmelzbaren Materials im rieselfähigen Zustand mittels des ersten Zuführ- und Dosierabschnitts und/oder das Aufschmelzen des schmelzbaren Materials mittels der Heizeinrichtung entsprechend dem gemessenen Füllstand steuert, vorgesehen sein.

Auf diese Weise lässt sich die Menge an bevorrateter flüssiger Kunststoffkomponente stets gleich halten oder genau einstellen. Dabei kann die Steuervorrichtung den ersten Zuführ- und Dosierabschnitt und/oder die Heizeinrichtung derart steuern, dass die Menge an flüssigem Material in der zweiten Bevorratungskammer dem unmittelbaren Bedarf entspricht. Die Menge kann insbesondere so eingestellt werden, dass diese auf eine vorbestimmte Anzahl von nachgelagerten Kunststoffverarbeitungsvorgängen begrenzt ist oder diese innerhalb einer vorbestimmten Zeit verarbeitet wird. So kann die Menge beispielsweise auf einen Bereich zwischen 2 bis 10, insbesondere 4 bis 8, bevorzugt 5 Kunststoffverarbeitungsvorgängen (Schuss) angepasst sein. Die Verweildauer in der zweiten Kammer kann auf einen Zeitraum kleiner gleich 30 Minuten, insbesondere kleiner gleich 15 Minuten festgelegt werden. Dadurch wird sichergestellt, dass das aufgeschmolzene Material auch ohne zusätzliche Heizleistung im flüssigen Aggregatszustand (vorzugsweise mit einer bestimmten Viskosität) verbleibt.

Gemäß einem Aspekt der Erfindung kann die Mischanordnung eine erste Schmelzvorrichtung zum Aufschmelzen einer im rieselförmigen Zustand zugeführten ersten reaktiven Kunststoffkomponente mit einem ersten Additiv, insbesondere Caprolactam mit einem Aktivator, und eine zweite Schmelzvorrichtung zum Aufschmelzen einer im rieselförmigen Zustand zugeführten zweiten reaktiven Kunststoffkomponente mit einem zweiten Additiv, insbesondere Caprolactam mit einem Katalysator, aufweisen.

Auf diese Weise können zwei reaktive Kunststoffkomponenten bedarfsgerecht aufbereitet bzw. aufgeschmolzen und innerhalb kurzer Zeit miteinander vermischt und verarbeitet werden. Durch die kurze Verweildauer der reaktiven Komponenten im flüssigen Zustand wird die Qualität und die Reaktionsfähigkeit der beiden reaktiven Komponenten aufrechterhalten. Durch die erfindungsgemäße Mischanordnung können somit die eingangs dargestellten Nachteile vermieden werden. Gerade auf Seiten der mit einem Katalysator vorgemischten Komponente kann eine rasche Verarbeitung nach dem Aufschmelzen sichergestellt werden.

Gemäß einem alternativen Aspekt der Erfindung kann die Mischanordnung eine erste Schmelzvorrichtung zum Aufschmelzen einer (z.B. reinen) Kunststoffkomponente, eine dritte Dosier- und Zuführvorrichtung zum dosierten Zuführen eines ersten Additivs, insbesondere eines Aktivators, zu der Mischkammer und/oder eine vierte Dosier- und Zuführvorrichtung zum dosierten Zuführen eines zweiten Additivs, insbesondere eines Katalysators, zu der Mischkammer aufweisen. Dabei können die Zuführung der Kunststoffkomponente und der Additive mittels der zweiten, dritten und/oder vierten Dosier- und Zuführvorrichtungen jeweils zeitlich und mengenmäßig (rezepturangemessen) derart aufeinander abgestimmt sein, dass sich diese und ggf. weitere Komponenten in der Mischkammer miteinander zu einem gewünschten reaktiven Gemisch vermischen.

Ein weiterer Aspekt der Erfindung betrifft ein Verfahren zum Mischen von reaktiven Kunststoffkomponenten nach dem Wortlaut des Anspruchs 9.

Weitere vorteilhafte Weiterbildungen der Erfindung ergeben sich aus der folgenden Beschreibung bevorzugter Ausführungsformen.

### Kurzbeschreibung der Zeichnungen

Die vorliegende Erfindung wird im Folgenden anhand bevorzugter Ausführungsbeispiele unter Bezugnahme auf die beigefügten Zeichnungen näher beschrieben. Es zeigen:
Fig. 1 eine schematische Darstellung einer Mischanordnung gemäß einer ersten Ausführungsform der Erfindung;
Fig. 2 eine detaillierte Ansicht einer Schmelzvorrichtung
Fig. 3 eine schematische Darstellung einer Mischanordnung gemäß einer zweiten Ausführungsform der Erfindung;
Fig. 4 eine schematische Darstellung einer Mischanordnung gemäß einer dritten Ausführungsform der Erfindung; und
Fig. 5 eine schematische Darstellung einer Mischanordnung gemäß einer Variante der dritten Ausführungsform der Erfindung; und

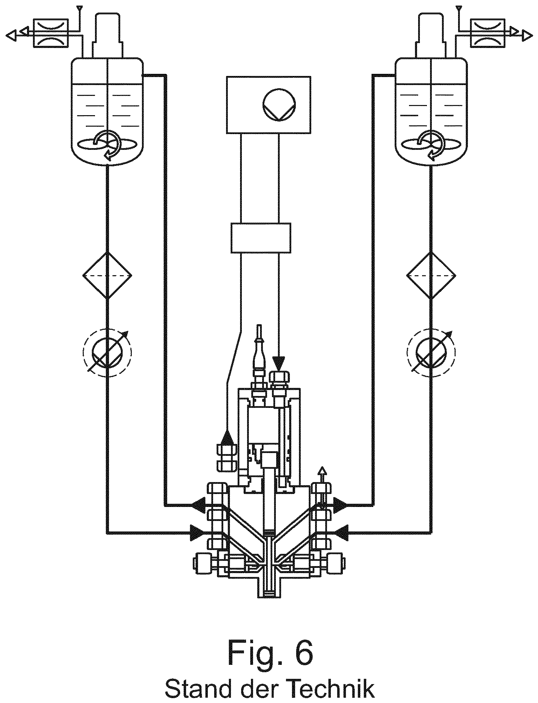

Fig. 6 eine schematische Darstellung einer konventionellen Mischanordnung gemäß dem Stand der Technik.

### Detaillierte Beschreibung bevorzugter Ausführungsformen

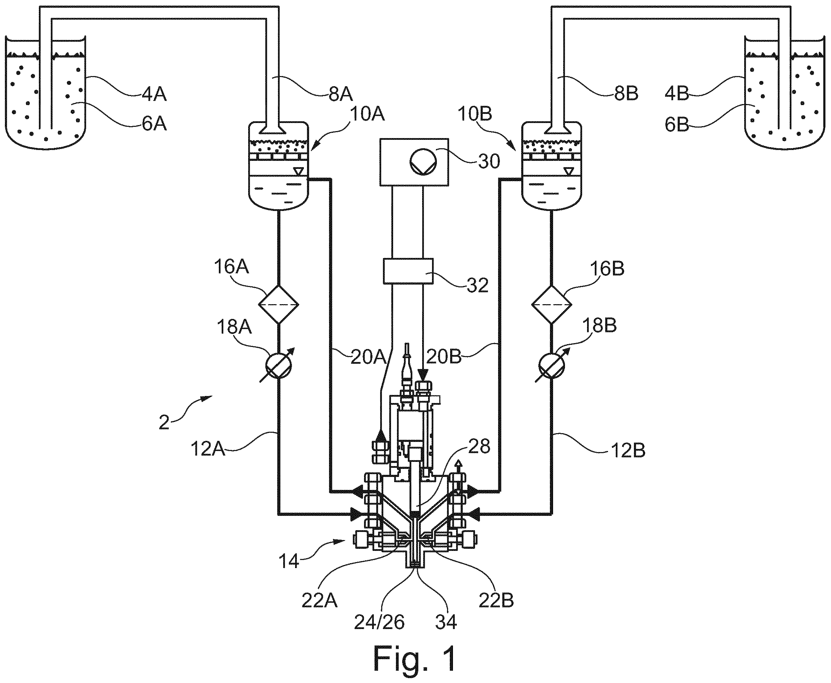

Fig. 1 zeigt eine Mischanordnung 2 zum Mischen von flüssigen, reaktiven Kunststoffkomponenten gemäß einer ersten Ausführungsform. Diese dient zur Aufbereitung der Kunststoffkomponenten, so dass diese anschließend in nachgelagerten Verarbeitungsprozessen zu Kunststoffteileherstellung verwendet werden können.

Diese Mischanordnung 2 weist einen ersten Vorratsbehälter 4A, in dem ein erstes Gemisch 6A aus einer ersten Kunststoffkomponente, z.B. Caprolactam, samt einem ersten Additiv, z.B. einem Aktivator, bevorratet wird, und einen zweiten Vorratsbehälter 4B, in dem ein zweites Gemisch 6B aus derselben oder einer anderen Kunststoffkomponente, z.B. Caprolactam, samt einem zweiten Additiv, z.B. einem Katalysator, bevorratet wird. Sie liegen jeweils rieselförmig (z.B. granulat-, schuppen-, pulverförmig oder in einer ähnlichen Form) vor, so dass die Kunststoffkomponenten mit dem jeweiligen Additiv noch nicht reagieren und in dieser Form auch länger gelagert werden können.

Diese beiden Gemische 6A und 6B werden mittels eines ersten Vakuumförderers 8A und eines zweiten Vakuumförderers 8B (oder jeder anderen geeigneten Fördereinrichtung) einer ersten Schmelzvorrichtung 10A bzw. einer zweiten Schmelzvorrichtung 10B zugeführt. Diese Schmelzvorrichtungen 10A und 10B sind baugleich und deren Aufbau sowie deren Funktionsweise wird weiter unten im Detail beschrieben.

Das mittels der ersten Schmelzvorrichtung 10A verflüssigte Gemisch 6A und das mittels der zweiten Schmelzvorrichtung 10B verflüssigte Gemisch 6B werden über entsprechende Zuführleitungen 12A und 12B einem Mischkopf 14 zugeführt. In den Zuführleitungen 12A und 12B sind jeweils ein Filter 16A, 16B und eine Dosiereinheit 18A, 18B bzw. Pumpe vorgesehen. Überschüssiges Material wird über entsprechende Rücklaufleitungen 20A und 20B vom Mischkopf 14 wieder zur jeweiligen Schmelzvorrichtung 10A bzw. 10B zurückgeführt oder zirkuliert.

Das jeweilige Gemisch 6A und 6B wird über entsprechend im Mischkopf 14 vorgesehene Eintrittsdüsen 22A bzw. 22B in eine Mischkammer 24 eingespritzt und miteinander vermischt und das entstandene reaktive Gemisch 26 mittels eines Kolbens 28, der mittels eines Hydraulikblocks 30 betätigt und durch einen Mischkopfsteuerblock 32 entsprechend angesteuert wird, über eine Austrittsöffnung 34 im Mischkopf 14 unmittelbar oder mittelbar in einen (nicht gezeigten) Formhohlraum gefördert.

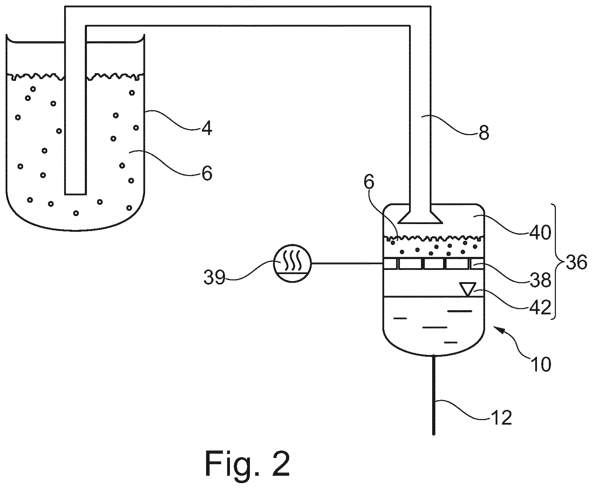

Fig. 2 zeigt in vergrößerter Darstellung die erste Schmelzvorrichtung 10A. Da beide Schmelzvorrichtungen 10A, 10B bau- und funktionsgleich sind, erfolgt eine gemeinsame Beschreibung für die Schmelzvorrichtung 10.

Die Schmelzvorrichtung 10 wird im Wesentlichen durch einen (z.B. einstückigen) Behälter 36 gebildet, der mittels eines Trenngitters 38 in eine vertikal obere, erste Kammer 40 und in eine vertikal untere, zweite Kammer 42 aufgeteilt ist. Das Grundkomponentengemisch 6 wird über den Vakuumförderer 8 der ersten (oberen) Kammer 40 zugeführt. Das Trenngitter 38 ist derart konfiguriert, dass das zugeführte Gemisch 6, solange es in Granulatform vorliegt, nicht durch das Trenngitter 38 nach unten in die zweite Kammer 42 fällt oder gelangt. Anders ausgedrückt ist die Maschenweite des Trenngitters 38 kleiner oder feiner als die Korngröße des im Vorratsbehälter 4 bevorrateten und der ersten Kammer 40 zugeführten rieselförmigen Ausgangsgemisches 6.

Das Trenngitter 38 ist mit einer Heizeinrichtung 39 beheizbar, so dass das mittels des Trenngitters 38 in der ersten Kammer 40 auf dem Trenngitter 38 liegende Gemisch 6 aufgeschmolzen bzw. verflüssigt werden kann. In flüssiger Form kann das aufgeschmolzene Gemisch 6 durch das Trenngitter 38 hindurch in die zweite (untere) Kammer 42 fließen bzw. abtropfen und schließlich in die Zuführleitung 12 gelangen.

Im Folgenden wird die Funktionsweise der Schmelzvorrichtung beschrieben.

Der Behälter 36 bzw. die beiden Kammern 40, 42 sind so ausgelegt, dass nur unmittelbar benötigte Mengen an rieselförmigem Ausgangsmaterial bzw. verflüssigtem Material 6 vorgehalten werden müssen. So kann die erste Kammer 40 vorzugsweise 10 bis 20 kg des granulatförmigen Gemisches 6 aufnehmen und die zweite Kammer 42 aufgeschmolzenes Material aufnehmen, welches lediglich für eine bestimmte, kleine Anzahl von kunststoffverarbeitenden Vorgängen, z.B. max. 5 Schuss, oder für kunststoffverarbeitende Vorgänge innerhalb eines vorbestimmten Zeitraums, z.B. max. 15 Minuten, ausreicht.

Auf diese Weise können die benötigten Kunststoffkomponenten bedarfsgerecht oder rezepturangemessen aufbereitet werden. Auf diese Weise werden jeweils nur kleine Mengen an flüssigen Grundstoffkomponenten hergestellt, welche unmittelbar verarbeitet werden. Somit lassen sich kleine Menge aufschmelzen, aber dies im Wesentlichen kontinuierlich.

Die Dosier- und Zuführeinrichtung (Vakuumförderer 8), welches das rieselförmige Ausgangsgemisch 6 der ersten Kammer 40 der Schmelzvorrichtung 10 zuführt, und die Dosier- und Zuführeinrichtung (Dosiereinheit 18), welche das aufgeschmolzenen Material 6 aus der zweiten Kammer 42 der Schmelzvorrichtung 10 entnimmt, sind steuerungs- oder regelungstechnisch entsprechend aufeinander abgestimmt. D.h., der Vakuumförderer 8A, 8B wird (über eine integrierte oder zentrale Steuereinrichtung) so angesteuert, dass er nur jeweils so viel an rieselfähigem Kunststoffmaterial 6 der ersten Kammer 40 zuführt, welches der Menge an entnommenen flüssigen Kunststoffmaterial 6 aus der zweiten Kammer 42 entspricht. Die zweite Kammer 42 fungiert lediglich als eine Art Kurzzeitpuffer, um etwaige Schwankungen, verursacht durch den diskontinuierlichen Bedarf bei den nachgelagerten Verarbeitungsvorgängen, ausgleichen zu können. Der Aufschmelzvorgang hingegen kann kontinuierlich erfolgen.

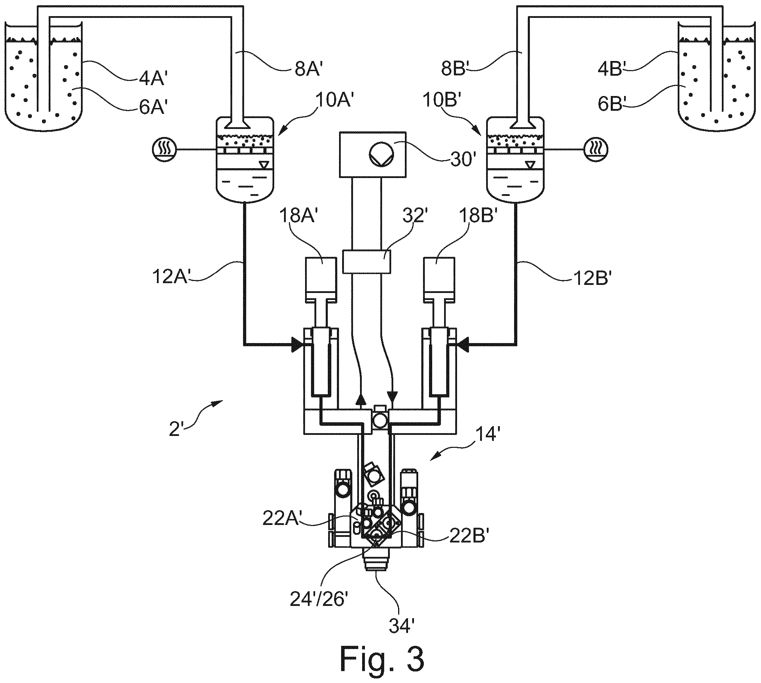

Die Fig. 3 zeigt ein Funktionsschaubild einer Mischanordnung 2' gemäß einer zweiten Ausführungsform, die sich von der ersten Ausführungsform lediglich im Aufbau des Mischkopfes 14' und der Zuführung des aufgeschmolzenen Materials zum Mischkopf 14' unterscheidet. Die Zuführung und Dosierung des aufgeschmolzenen Materials erfolgt anstelle von Pumpen 18A, 18B über Dosierzylinder 18A' und 18B', die unmittelbar vor oder am Mischkopf 14' angeordnet sind, mit den Zuführleitungen 12A' bzw. 12B' verbunden sind und über welche sich die in die Mischkammer 24' einzuspritzenden Mengen genau dosieren lassen. Die Rücklaufleitungen 20A und 20B können somit bei dieser Variante entfallen. Der Mischkopf 24' hat einen entsprechend geänderten Aufbau, ist aber in seiner Funktionsweise ähnlich wie oben mit Bezug auf die erste Ausführungsform beschrieben.

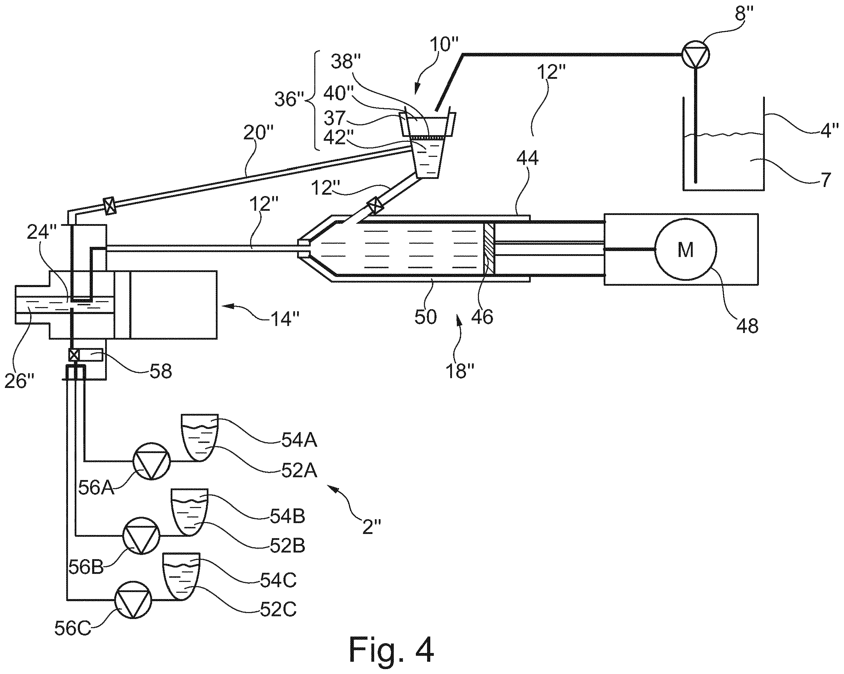

Die Fig. 4 zeigt ein Funktionsschaubild einer Mischanordnung 2" zum Mischen von flüssigen, reaktiven Kunststoffkomponenten gemäß einer dritten Ausführungsform. Aus der Fig. 4 ist sofort erkennbar, dass im Gegensatz zur ersten und zweiten Ausführungsform ein, zwei oder mehrere Additive nicht anfangs, d.h. vor dem Schmelzvorgang, dem Kunststoffrohstoff beigemischt werden, sondern erst unmittelbar dem Mischkopf 14" bzw. der Mischkammer 24" zugeführt werden. Vor diesem Hintergrund ist nur ein Vorratsbehälter oder -lager 4" für die (reine bzw. unvermischte bzw. ohne Beigabe von Additiven) Kunststoffkomponente 7, z.B. Caprolactam, vorgesehen. Die Kunststoffkomponente 7 kann dort in fester Form bzw. rieselförmig (granulat-, schuppen-, pulverförmig oder in ähnlicher Form) oder auch in flüssiger Form gelagert werden.

Mittels einer Fördereinheit 8" (Vakuumförderer, Pumpe oder Ähnliches) wird die Kunststoffkomponente 7 der Schmelzeinrichtung 10", genauer gesagt einer ersten Kammer 40", zugeführt. Die Schmelzeinrichtung 10" weist einen trichterförmigen Behälter 36" auf, welcher wiederum über ein Trenngitter 38" in die vertikal obere erste Kammer 40" und in eine vertikal untere zweite Kammer 42" aufgeteilt ist. Das Trenngitter 38" ist derart konfiguriert, dass das zugeführte Gemisch, solange es in Granulatform oder sehr zähflüssigem Zustand vorliegt, nicht durch das Trenngitter 38" nach unten in die zweite Kammer 42" fällt oder gelangt. Anders ausgedrückt ist die Maschenweite des Trenngitters 38 kleiner oder feiner als die Korngröße der im Vorratsbehälter 4" bevorrateten und der ersten Kammer 40" zugeführten rieselförmigen Kunststoffkomponente 7 oder hält das Gitter 36" das zähflüssige Material 7 zurück.

Im Gegensatz zur ersten und zweiten Ausführungsform ist alternativ oder zusätzlich zum Trenngitter 38" die erste Kammer 40" beheizbar. Konkret kann, wie in der Fig. 4 gezeigt, die Wandung der ersten Kammer 40" mit einem Heizband 37 versehen sein, welche die Wandung der ersten Kammer 40" derart aufheizen kann, dass die in der ersten Kammer 40" kurzzeitig bevorratete Kunststoffkomponente 7 aufgeschmolzen wird und sich verflüssigt. Im aufgeschmolzenen bzw. verflüssigten Zustand fließt oder tropft die Kunststoffkomponente 7 durch das Trenngitter 38" in die darunter gelegene zweite Kammer 42". Eine Austrittsöffnung am Boden der zweiten Kammer 42" ist über einer Zuführleitung 12" mit einer Dosiereinheit 18" verbunden, mittels welcher die verflüssigte Kunststoffkomponente 7 einem Mischkopf 14" bzw. einer Mischkammer 24" zugeführt wird. Über eine Rücklaufleitung 20" wird eine überschüssige Menge der Kunststoffkomponente 7 wieder zu der Schmelzvorrichtung 10", genauer gesagt zu der zweiten Kammer 42", zurückgeführt oder eine Zirkulation ermöglicht.

Die Dosiereinheit 18 weist einen Dosierzylinder 44 und einen Dosierkolben 46 auf, der über einen Motor 48 betätigbar ist. Der Dosierzylinder 44 kann beheizbar ausgebildet sein und hierfür mit einer, z.B. in der Zylinderwandung integrierten, Heizeinrichtung 50 versehen sein. Dadurch kann sichergestellt werden, dass sich die verflüssigte Kunststoffkomponente 7 nicht abkühlt oder deren Viskosität sich verändert. Über einen ersten Teilabschnitt der Zuführleitung 12" wird die verflüssigte Kunststoffkomponente 7 von der zweiten Kammer 42" der Schmelzvorrichtung 10" dem Dosierzylinder 44 zugeführt und mittels des Dosierkolbens 46 über den zweiten Teilabschnitt der Zuführleitung 12" der Mischkammer 24" unter Druck zugeführt.

Ein, zwei, drei oder mehrere Additive 52A, 52B, 52C werden von entsprechenden Behältern 54A, 54B, 54C, in welchen diese bevorratet werden, über jeweilige Fördereinheiten 56A, 56B, 56C dem Mischkopf 14", genauer gesagt der Mischkammer 24", zugeführt, so dass sich diese mit der zugeführten verflüssigten Kunststoffkomponente 7 in der Mischkammer 24" zu einem reaktiven Gemisch 26" vermischen und als solches auf dem Mischkopf 24" zur weiteren Verarbeitung ausgegeben werden kann.

Bei den Additiven kann es sich zumindest um einen Aktivator und einen Katalysator handeln, welche die chemische Reaktion des Caprolactams im Mischkopf 24" initiieren.

Die genaue Dosierung der Additive kann über die jeweiligen Fördereinheiten 56A, 56B, 56C und/oder über eine im Mischkopf 14" vorgesehene Steuerventilanordnung 58 erfolgen.

In der Fig. 5 ist eine Variante der dritten Ausführungsform dargestellt, welche sich darin unterscheidet, dass die Zuführung der Kunststoffkomponente 7 mittels der Dosiereinheit 18" derart erfolgt, dass auf eine Zirkulation bzw. auf die Rücklaufleitung 20" verzichtet werden kann.

Die Erfindung wurde anhand bevorzugter Ausführungsformen beschrieben, ist jedoch nicht auf diese beschränkt.

So kann beispielsweise in einer weiter abgewandelten Form der dritten Ausführungsform der Aktivator oder der Katalysator der Kunststoffkomponente 7 bereits im Vorratsbehälter 4" beigemischt sein und das andere von den beiden Additiven erst unmittelbar der Mischkammer 24" zugeführt werden.

### Bezugszeichenliste

- 2; 2'; 2': Mischanordnung
- 4, 4A, 4B; 4A', 4B'; 4": Vorratsbehälter
- 6, 6A, 6B; 6A', 6B': Gemisch
- 7: Kunststoffkomponente
- 8; 8A, 8B; 8A', 8B'; 8": Vakuumförderer (erste Dosier- und Zuführeinrichtung)
- 10, 10A, 10B; 10A', 10B'; 10": Schmelzvorrichtung
- 12, 12A, 12B; 12A', 12B'; 12": Zuführleitung
- 14; 14'; 14": Mischkopf
- 16; 16'; 16": Filter
- 18, 18A; 18B; 18A', 18B'; 18": Dosiereinheit (zweite Dosier- und Zuführeinrichtung)
- 20, 20A, 20B; 20": Rücklaufleitung
- 22, 22A, 22B; 22A', 22B': Eintrittsdüse
- 24; 24'; 24": Mischkammer
- 26; 26'; 26": reaktives Gemisch
- 28: Kolben
- 30; 30': Hydraulikblock
- 32; 32': Mischkopfsteuerblock
- 34; 34': Austrittsöffnung
- 36; 36'; 36": Behälter
- 37: Heizeinrichtung
- 38; 38": Trenngitter (Trennabschnitt)
- 39: Heizeinrichtung
- 40; 40": Erste Behälterkammer (erster Bevorratungsabschnitt)
- 42; 42": Zweite Behälterkammer (zweiter Bevorratungsabschnitt)
- 44: Dosierzylinder
- 46: Dosierkolben
- 48: Motor
- 50: Heizeinrichtung
- 52A, 52B, 52C: Additive
- 54A, 54B, 54C: Behälter
- 56A, 56A, 56C: Fördereinheit
- 58: Ventilanordnung

## Patentansprüche

1. Mischanordnung (2; 2'; 2") zum Mischen von reaktiven Kunststoffkomponenten (6, 6A, 6B; 6A', 6B'; 7), mit:
einer Mischkammer (24; 24'; 24"), in welcher die reaktiven Kunststoffkomponenten (6, 6A, 6B; 6A', 6B'; 7) miteinander zu einem reaktiven Gemisch (26; 26'; 26") vermischbar sind;
zumindest einer Schmelzvorrichtung (10, 10A, 10B; 10A', 10B'; 10"),
einer ersten Dosier- und Zuführvorrichtung (8, 8A, 8B; 8A', 8B'; 8") zum Zuführen eines rieselförmigen Ausgangsmaterials (6, 6A, 6B; 6A', 6B'; 7) zu der zumindest einen Schmelzvorrichtung (10, 10A, 10B; 10A', 10B'; 10"),
wobei die zumindest eine Schmelzvorrichtung (10, 10A, 10B; 10A', 10B'; 10") einen Behälter (36; 36'; 36") aufweist, in dem das im rieselförmigen Zustand zugeführte, schmelzbare Ausgangsmaterial (6, 6A, 6B; 6A', 6B'; 7) aufgeschmolzen und im flüssigen Zustand bevorratet werden kann, und wobei der Behälter (36; 36'; 36") ferner einen ersten Bevorratungsabschnitt (40; 40") zum Bevorraten des schmelzbaren Materials (6, 6A, 6B; 6A', 6B'; 7) im rieselfähigen Zustand und einen zweiten Bevorratungsabschnitt (42; 42") zum Bevorraten des aufgeschmolzenen Materials (6, 6A, 6B; 7) im flüssigen Zustand aufweist; und
einer zweiten Dosier- und Zuführvorrichtung (18, 18A; 18B; 18A', 18B'; 18") zum dosierten Zuführen der in der zumindest einen Schmelzvorrichtung (10, 10A, 10B; 10A', 10B'; 10") aufgeschmolzenen Kunststoffkomponente (6, 6A, 6B; 6A', 6B'; 7) zu der Mischkammer (24; 24'; 24"); **dadurch gekennzeichnet, dass**
der Behälter (36; 36'; 36") ferner einen Trennabschnitt (38; 38") aufweist, welcher Trennabschnitt (38; 38") zwischen dem ersten Bevorratungsabschnitt (40; 40") und dem zweiten Bevorratungsabschnitt (42; 42") vorgesehen ist und derart ausgestaltet ist, dass er das Material (6, 6A, 6B; 6A', 6B'; 7) im nicht aufgeschmolzenen oder rieselfähigen Zustand zurückhält und im aufgeschmolzenen oder flüssigen Zustand von dem ersten Bevorratungsabschnitt (40; 40") in den zweiten Bevorratungsabschnitt (42; 42") passieren lässt, wobei
die erste Dosier- und Zuführvorrichtung (8; 8A, 8B; 8A', 8B'; 8") und die zweite Dosier- und Zuführvorrichtung (18, 18A; 18B; 18A', 18B'; 18") derart aufeinander abgestimmt sind, dass in der zumindest einen Schmelzvorrichtung (10, 10A, 10B; 10A', 10B'; 10") lediglich eine vorbestimmte Menge an schmelzbaren Material (6, 6A, 6B; 6A', 6B'; 7) aufgeschmolzen wird, welche dem unmittelbaren Bedarf an dieser Kunststoffkomponente (6, 6A, 6B; 6A', 6B'; 7) entspricht.

2. Mischanordnung (2; 2'; 2") nach Anspruch 1, **dadurch gekennzeichnet, dass** der erste Bevorratungsabschnitt (40; 40") vertikal über dem zweiten Bevorratungsabschnitt (42; 42") angeordnet ist; und
der Trennabschnitt (38; 38") ein Gitter mit einer Maschenweite oder eine Lochplatte mit einem Lochdurchmesser kleiner als die Korngröße des Materials (6, 6A, 6B; 6A', 6B'; 7) im rieselförmigen Zustand ist.

3. Mischanordnung (2; 2'; 2") nach Anspruch 1 oder 2, **dadurch gekennzeichnet, dass** der erste Bevorratungsabschnitt (40; 40") und/oder der Trennabschnitt (38; 38") mit einer Heizvorrichtung (37; 39) beheizbar sind/ist, um das rieselförmige, schmelzbare Material (6, 6A, 6B; 6A', 6B'; 7), vorzugsweise kontinuierlich, aufzuschmelzen.

4. Mischanordnung (2; 2'; 2") nach einem der Ansprüche 1 bis 3, **dadurch gekennzeichnet, dass** die erste Dosier- und Zuführvorrichtung (8; 8A, 8B; 8A', 8B'; 8") zum dosierten, insbesondere kontinuierlichen, Zuführen des schmelzbaren Materials (6, 6A, 6B; 6A', 6B'; 7) im rieselförmigen Zustand in den ersten Bevorratungsabschnitt (40; 40"); und/oder die zweite Dosier- und Zuführvorrichtung (18, 18A, 18B; 18A', 18B'; 18") zum dosierten, insbesondere diskontinuierlichen, Abführen des aufgeschmolzenen Materials (6, 6A, 6B; 6A', 6B'; 7) im flüssigen Zustand aus dem zweiten Bevorratungsabschnitt (42; 42") ausgestaltet sind/ist.

5. Mischanordnung (2; 2'; 2") nach Anspruch 3 oder 4, ferner **gekennzeichnet durch**:
eine Füllstandmesseinrichtung, welche den Füllstand des in dem zweiten Bevorratungsabschnitt (42; 42") im flüssigen Zustand bevorrateten Materials (6, 6A, 6B; 6A', 6B'; 7) misst;
eine Steuervorrichtung, welche die Zuführung des schmelzbaren Materials (6, 6A, 6B; 6A', 6B'; 7) im rieselfähigen Zustand mittels der ersten Dosier- und Zuführvorrichtung (8; 8A, 8B; 8A', 8B'; 8") und/oder das Aufschmelzen des schmelzbaren Materials (6, 6A, 6B; 6A', 6B'; 7) mittels der Heizeinrichtung (37; 39) entsprechend dem gemessenen Füllstand steuert.

6. Mischanordnung (2; 2") nach Anspruch 5, **dadurch gekennzeichnet, dass** die Steuervorrichtung die erste Dosier- und Zuführvorrichtung (8; 8A, 8B; 8A', 8B'; 8") und/oder die Heizeinrichtung (37; 39) derart steuert, dass die Menge an flüssigem Material (6, 6A, 6B; 7) in der zweiten Bevorratungskammer (42) dem unmittelbaren Bedarf entspricht.

7. Mischanordnung (2; 2') nach einem der Ansprüche 1 bis 6, mit:
einer ersten Schmelzvorrichtung (10A; 10A') zum Aufschmelzen einer im rieselförmigen Zustand zugeführten ersten reaktiven Kunststoffkomponente (6A; 6A') mit einem ersten Additiv, insbesondere Caprolactam mit einem Aktivator,
einer zweiten Schmelzvorrichtung (10B; 10B') zum Aufschmelzen einer im rieselförmigen Zustand zugeführten zweiten reaktiven Kunststoffkomponente (6B; 6B') mit einem zweiten Additiv, insbesondere Caprolactam mit einem Katalysator.

8. Mischanordnung (2") nach einem der Ansprüche 1 bis 7, mit:
einer dritten Dosier- und Zuführvorrichtung (56A, 58) zum dosierten Zuführen eines ersten Additivs (52A), insbesondere eines Aktivators, zu der Mischkammer (24");
einer vierten Dosier- und Zuführvorrichtung (56B, 58) zum dosierten Zuführen eines zweiten Additivs (52B), insbesondere eines Katalysators, zu der Mischkammer (24); wobei
die Zuführung der Kunststoffkomponente (7) und der Additive (52A, 52B) mittels der zweiten, dritten und vierten Dosier- und Zuführvorrichtungen (18", 56A, 56B) zeitlich und mengenmäßig derart aufeinander abgestimmt sind, dass sich diese und ggf. weitere Komponenten in der Mischkammer (24") miteinander zu dem gewünschten reaktiven Gemisch (26") vermischen.

9. Verfahren zum Mischen von reaktiven Kunststoffkomponenten (6A, 6B; 6A', 6B'), mit den Schritten:
dosiertes Zuführen der reaktiven Kunststoffkomponenten (6A, 6B; 6A', 6B') im rieselförmigen Zustand jeweils zu einer entsprechenden Schmelzvorrichtung (10A, 10B; 10A', 10B'), wobei die zumindest eine Schmelzvorrichtung (10, 10A, 10B; 10A', 10B'; 10") einen Behälter (36; 36'; 36") aufweist, in dem das im rieselförmigen Zustand zugeführte, schmelzbare Ausgangsmaterial (6, 6A, 6B; 6A', 6B'; 7) aufgeschmolzen und im flüssigen Zustand bevorratet werden kann, und wobei der Behälter (36; 36'; 36") ferner einen ersten Bevorratungsabschnitt (40; 40") zum Bevorraten des schmelzbaren Materials (6, 6A, 6B; 6A', 6B'; 7) im rieselfähigen Zustand und einen zweiten Bevorratungsabschnitt (42; 42") zum Bevorraten des aufgeschmolzenen Materials (6, 6A, 6B; 7) im flüssigen Zustand aufweist;
Aufschmelzen der reaktiven Kunststoffkomponenten (6A, 6B; 6A', 6B') in der jeweiligen Schmelzvorrichtung (10A, 10B; 10A', 10B');
dosiertes Zuführen der jeweiligen aufgeschmolzenen Kunststoffkomponente (6A, 6B; 6A', 6B') zu einer Mischkammer (24; 24'), und
Vermischen der aufgeschmolzenen Kunststoffkomponenten (6A, 6B; 6A', 6B') miteinander zu einem reaktiven Gemisch in der Mischkammer (24; 24');
**gekennzeichnet durch**:
Abstimmen der beiden Zuführungsschritte derart aufeinander, dass in der jeweiligen Schmelzvorrichtung (10A, 10B; 10A', 10B') lediglich eine vorbestimmte Menge an der reaktiven Kunststoffkomponente (6A, 6B; 6A', 6B') aufgeschmolzen wird, welche dem unmittelbaren Bedarf an dieser Kunststoffkomponente (6A, 6B; 6A', 6B') entspricht, wobei der Behälter (36; 36'; 36") ferner einen Trennabschnitt (38; 38") aufweist, welcher Trennabschnitt (38; 38") zwischen dem ersten Bevorratungsabschnitt (40; 40") und dem zweiten Bevorratungsabschnitt (42; 42") vorgesehen ist und das Material (6, 6A, 6B; 6A', 6B'; 7) im nicht aufgeschmolzenen oder rieselfähigen Zustand zurückhält und im aufgeschmolzenen oder flüssigen Zustand von dem ersten Bevorratungsabschnitt (40; 40") in den zweiten Bevorratungsabschnitt (42; 42") passieren lässt.

## Claims

1. A mixing arrangement (2; 2'; 2") for the mixing of reactive plastic components (6, 6A, 6B; 6A', 6B'; 7), with:
a mixing chamber (24; 24'; 24"), in which the reactive plastic components (6, 6A, 6B; 6A', 6B'; 7) are able to be mixed with one another to form a reactive mixture (26; 26'; 26");
at least one melting device (10, 10A, 10B; 10A', 10B'; 10"),
a first dosing and feeding device (8, 8A, 8B; 8A', 8B'; 8") for feeding a free-flowing starting material (6, 6A, 6B; 6A', 6B'; 7) to the at least one melting device (10, 10A, 10B; 10A', 10B'; 10"),
wherein the at least one melting device (10, 10A, 10B; 10A', 10B'; 10") has a container (36; 36'; 36"), in which the meltable starting material (6, 6A, 6B; 6A', 6B'; 7), which is fed in free-flowing state, can be melted and stored in the liquid state, and wherein the container (36; 36'; 36")has in addition a first storage section (40; 40") for storing the meltable material (6, 6A, 6B; 6A', 6B'; 7) in the free-flowing state, and a second storage section (42; 42") for storing the melted material (6, 6A, 6B; 6A', 6B'; 7) in the liquid state; and
a second dosing and feeding device (18, 18A; 18A', 18B'; 18") for the dosed feeding of the plastic component (6, 6A, 6B; 6A', 6B'; 7) melted in the at least one melting device (10, 10A, 10B; 10A', 10B'; 10") to the mixing chamber (24; 24'; 24"); **characterized in that**
the container (36; 36'; 36") has in addition a separating section (38; 38"), which separating section (38; 38") is provided between the first storage section (40; 40") and the second storage section (42; 42") and is configured such that it holds back the material (6, 6A, 6B; 6A', 6B'; 7) in the non-melted or free-flowing state and in the melted or liquid state allows it to pass from the first storage section (40; 40") into the second storage section (42; 42"), wherein
the first dosing- and feeding device (8, 8A, 8B; 8A', 8B'; 8") and the second dosing- and feeding device (18, 18A; 18A', 18B'; 18") are coordinated with one another such that in the at least one melting device (10, 10A, 10B; 10A', 10B'; 10") only a predetermined quantity of meltable material (6, 6A, 6B; 6A', 6B'; 7) is melted, which corresponds to the immediate requirement for this plastic component (6, 6A, 6B; 6A', 6B'; 7).

2. The mixing arrangement (2; 2'; 2") according to claim 1, **characterized in that** the first storage section (40; 40") is arranged vertically over the second storage section (42; 42"); and
the separating section (38; 38") is a grid with a mesh width or a perforated plate with a perforation diameter smaller than the grain size of the material (6, 6A, 6B; 6A', 6B'; 7) in the free-flowing state.

3. The mixing arrangement (2; 2'; 2") according to claim 1 or 2, **characterized in that** the first storage section (40; 40") and/or the separating section (38; 38") is/are able to be heated by a heating device (37; 39), in order to melt the free-flowing, meltable material (6, 6A, 6B; 6A', 6B'; 7), preferably continuously.

4. The mixing arrangement (2; 2'; 2") according to one of claims 1 to 3, **characterized in that** the first dosing- and feeding device (8; 8A, 8B; 8A', 8B'; 8") is configured for the dosed, in particular continuous, feeding of the meltable material (6, 6A, 6B; 6A', 6B'; 7) in the free-flowing state into the first storage section (40; 40"); and/or the second dosing- and feeding device (18, 18A, 18B; 18A', 18B'; 18") is configured for the dosed, in particular discontinuous, discharging of the melted material (6, 6A, 6B; 6A', 6B'; 7) in the liquid state out from the second storage section (42; 42").

5. The mixing arrangement (2; 2'; 2") according to claim 3 or 4, further **characterized by**:
a filling level measuring device, which measures the filling level of the material (6, 6A, 6B; 6A', 6B'; 7) stored in the second storage section (42; 42") in the liquid state;
a control device, which controls the feeding of the meltable material (6, 6A, 6B; 6A', 6B'; 7) in the free-flowing state by means of the first dosing- and feeding device (8; 8A, 8B; 8A', 8B'; 8") and/or the melting of the meltable material (6, 6A, 6B; 6A', 6B'; 7) by means of the heating device (37; 39) according to the measured filling level.

6. The mixing arrangement (2; 2") according to claim 5, **characterized in that** the control device controls the first dosing- and feeding device (8; 8A, 8B; 8A', 8B'; 8") and/or the heating device (37; 39) such that the quantity of liquid material (6, 6A, 6B; 7) in the second storage chamber (42) corresponds to the immediate requirement.

7. The mixing arrangement (2; 2') according to one of claims 1 to 6, with:
a first melting device (10A; 10A') for the melting of a first reactive plastic component (6A; 6A'), fed in the free-flowing state, with a first additive, in particular caprolactam with an activator,
a second melting device (10B; 10B') for the melting of a second reactive plastic component (6B; 6B'), fed in the free-flowing state, with a second additive, in particular caprolactam with a catalyst.

8. The mixing arrangement (2") according to one of claims 1 to 7, with:
a third dosing- and feeding device (56A, 58) for the dosed feeding of a first additive (52A), in particular an activator, to the mixing chamber (24");
a fourth dosing- and feeding device (56B, 58) for the dosed feeding of a second additive (52B), in particular a catalyst, to the mixing chamber (24); wherein
the feeding of the plastic component (7) and of the additives (52A, 52B) by means of the second, third and fourth dosing- and feeding devise (18"; 56A, 56B) are coordinated with one another chronologically and quantitatively such that these and, if applicable, further components, mix with one another in the mixing chamber (24") to form the desired reactive mixture (26").

9. A method for the mixing of reactive plastic components (6A, 6B; 6A', 6B'), with the steps:
dosed feeding of the reactive plastic components (6A, 6B; 6A', 6B') in the free-flowing state respectively to a corresponding melting device (10A, 10B; 10A', 10B'), wherein the at least one melting device (10, 10A, 10B; 10A', 10B'; 10") has a container (36; 36'; 36"), in which the meltable starting material (6, 6A, 6B; 6A', 6B'; 7), fed in the free-flowing state, can be melted and stored in the liquid state, and wherein the container (36; 36'; 36") has in addition a first storage section (40; 40") for storing the meltable material (6, 6A, 6B; 6A', 6B'; 7) in the free-flowing state, and a second storage section (42; 42") for storing the melted material (6, 6A, 6B; 7) in the liquid state;
melting of the reactive plastic components (6A, 6B; 6A', 6B') in the respective melting device (10A, 10B; 10A', 10B');
dosed feeding of the respective melted plastic component (6A, 6B; 6A', 6B') to a mixing chamber (24; 24'), and
mixing of the melted plastic components (6A, 6B; 6A', 6B') with one another to form a reactive mixture in the mixing chamber (24; 24');
**characterized by**
coordinating the two feeding steps with one another such that in the respective melting device (10A, 10B; 10A', 10B') only a predetermined quantity of the reactive plastic component (6A, 6B; 6A', 6B') is melted, which corresponds to the immediate requirement for this plastic component (6A, 6B; 6A', 6B'), wherein the container (36; 36'; 36") has in addition a separating section (38; 38"), which separating section (38; 38") is provided between the first storage section (40; 40") and the second storage section (42; 42") and holds back the material (6, 6A, 6B; 6A', 6B'; 7) in the non-melted or free-flowing state and in the melted or liquid state allows it to pass from the first storage section (40; 40") into the second storage section (42; 42").

## Revendications

1. Agencement de mélange (2 ; 2' ; 2") permettant de mélanger des composants de matière plastique réactifs (6, 6A, 6B ; 6A', 6B' ; 7), comprenant :
une chambre de mélange (24 ; 24' ; 24") dans laquelle les composants de matière plastique réactifs (6, 6A, 6B ; 6A', 6B' ; 7) peuvent être mélangés entre eux en un mélange réactif (26 ; 26' ; 26") ;
au moins un dispositif de fusion (10, 10A, 10B ; 10A', 10B' ; 10"),
un premier dispositif de dosage et d'alimentation (8, 8A, 8B ; 8A' ; 8B' ; 8") pour alimenter un matériau de départ (6, 6A, 6B ; 6A', 6B' ; 7) qui s'égoutte vers l'au moins un dispositif de fusion (10, 10A, 10B ; 10A', 10B' ; 10"),
dans lequel l'au moins un dispositif de fusion (10, 10A, 10B ; 10A', 10B' ; 10") présente un récipient (36 ; 36' ; 36") dans lequel le matériau de départ (6, 6A, 6B ; 6A', 6B' ; 7) fusible alimenté à l'état d'égouttage est fondu et peut être approvisionné à l'état fluidique, et dans lequel le récipient (36 ; 36' ; 36") présente en outre un premier tronçon d'approvisionnement (40 ; 40") pour approvisionner le matériau de départ (6, 6A, 6B ; 6A', 6B' ; 7) fusible à l'état d'égouttage et un deuxième tronçon d'approvisionnement (42 ; 42") pour approvisionner le matériau de départ (6, 6A, 6B ; 7) fondu à l'état liquide ; et
un deuxième dispositif de dosage et d'alimentation (18, 18A, 18B ; 18A' ; 18B' ; 18") pour l'alimentation dosée des composants de matière plastique réactifs (6, 6A, 6B ; 6A', 6B' ; 7) fondus dans l'au moins un dispositif de fusion (10, 10A, 10B ; 10A', 10B' ; 10") vers la chambre de mélange (24 ; 24' ; 24"), **caractérisé en ce que**
le récipient (36 ; 36' ; 36") présente en outre un tronçon de séparation (38 ; 38"), lequel tronçon de séparation (38 ; 38") est prévu entre le premier tronçon d'approvisionnement (40 ; 40") et le deuxième tronçon d'approvisionnement (42 ; 42") et est ainsi conçu qu'il retient le matériau (6, 6A, 6B ; 6A', 6B' ; 7) à l'état non fondu ou qui s'égoutte et le laisse passer à l'état fondu ou fluidique du premier tronçon d'approvisionnement (40 ; 40") au deuxième tronçon d'approvisionnement (42 ; 42"), dans lequel
le premier dispositif de dosage et d'alimentation (8, 8A, 8B ; 8A' ; 8B' ; 8") et le deuxième dispositif de dosage et d'alimentation (18, 18A, 18B ; 18A' ; 18B' ; 18") sont ainsi coordonnés entre eux que dans l'au moins un dispositif de fusion (10, 10A, 10B ; 10A', 10B' ; 10"), seule une quantité prédéterminée de matériau de départ (6, 6A, 6B ; 6A', 6B' ; 7) fusible est fondue, laquelle correspond au besoin immédiat de ces composants de matière plastique réactifs (6, 6A, 6B ; 6A', 6B' ; 7).

2. Agencement de mélange (2 ; 2' ; 2") selon la revendication 1, **caractérisé en ce que** le premier tronçon d'approvisionnement (40 ; 40") est disposé verticalement au-dessus du deuxième tronçon d'approvisionnement (42 ; 42") ; et
le tronçon de séparation (38 ; 38") est une grille avec une grosseur de maille ou une plaque trouée avec un diamètre de trou inférieur à la grosseur de grain du matériau (6, 6A, 6B ; 6A', 6B' ; 7) à l'état d'égouttage.

3. Agencement de mélange (2 ; 2' ; 2") selon la revendication 1 ou 2, **caractérisé en ce que** le premier tronçon d'approvisionnement (40 ; 40") et/ou le tronçon de séparation (38 ; 38") peu(ven)t être chauffé(s) par un dispositif de chauffage (37 ; 39) pour fondre, de préférence en continu, le matériau (6, 6A, 6B ; 6A', 6B' ; 7) fusible qui s'égoutte.

4. Agencement de mélange (2 ; 2' ; 2") selon l'une des revendications 1 à 3, **caractérisé en ce que** le premier dispositif de dosage et d'alimentation (8, 8A, 8B ; 8A' ; 8B' ; 8") est conçu pour l'alimentation dosée, en particulier continue, du matériau (6, 6A, 6B ; 6A', 6B' ; 7) fusible à l'état d'égouttage dans le premier premier tronçon d'approvisionnement (40 ; 40") et/ou le deuxième dispositif de dosage et d'alimentation (18, 18A, 18B ; 18A' ; 18B' ; 18") est conçu pour l'évacuation dosée, en particulier discontinue, du matériau (6, 6A, 6B ; 6A', 6B' ; 7) fondu à l'état fluidique hors du deuxième tronçon d'approvisionnement (42 ; 42").

5. Agencement de mélange (2 ; 2' ; 2") selon la revendication 3 ou 4, **caractérisé en outre par** :
un dispositif de mesure de niveau qui mesure le niveau du matériau (6, 6A, 6B ; 6A', 6B' ; 7) approvisionné à l'état fluidique dans le deuxième tronçon d'approvisionnement (42 ; 42") ;
un dispositif de commande qui commande l'alimentation du matériau (6, 6A, 6B ; 6A', 6B' ; 7) fusible à l'état d'égouttage au moyen du premier dispositif de dosage et d'alimentation (8, 8A, 8B ; 8A' ; 8B' ; 8") et/ou la fusion du matériau (6, 6A, 6B ; 6A', 6B' ; 7) fusible au moyen du dispositif de chauffage (37 ; 39) selon le niveau mesuré.

6. Agencement de mélange (2 ; 2") selon la revendication 5, **caractérisé en ce que** le dispositif de commande commande le premier dispositif de dosage et d'alimentation (8, 8A, 8B ; 8A' ; 8B' ; 8") et/ou le dispositif de chauffage (37 ; 39) de telle façon que la quantité de matériau (6, 6A, 6B ; 7) fluidique dans le deuxième tronçon d'approvisionnement (42) correspond au besoin immédiat.

7. Agencement de mélange (2 ; 2') selon l'une des revendications 1 à 6, comprenant :
un premier dispositif de fusion (10A ; 10A') pour faire fondre un premier composant de matière plastique réactif (6A ; 6A') alimenté à l'état d'égouttage avec un premier additif, en particulier du caprolactam avec un activateur,
un deuxième dispositif de fusion (10B ; 10B') pour faire fondre un deuxième composant de matière plastique réactif (6B ; 6B') alimenté à l'état d'égouttage avec un deuxième additif, en particulier du caprolactam avec un catalyseur.

8. Agencement de mélange (2") selon l'une des revendications 1 à 7, comprenant :
un troisième dispositif de dosage et d'alimentation (56A, 58) pour l'alimentation dosée d'un premier additif (52A), en particulier d'un activateur, vers la chambre de mélange (24") ;
un quatrième dispositif de dosage et d'alimentation (56B, 58) pour l'alimentation dosée d'un deuxième additif (52B), en particulier d'un catalyseur, vers la chambre de mélange (24) ; dans lequel
l'alimentation du composant de matière plastique (7) et des additifs (52A, 52B) au moyen des deuxième, troisième et quatrième dispositifs de dosage et d'alimentation (18", 56A, 56B) est coordonnée entre eux dans le temps et en quantité de telle façon que ceux-ci et le cas échéant d'autres composants se mélangent entre eux en le mélange réactif (26") souhaité dans la chambre de mélange (24").

9. Procédé permettant de mélanger des composants de matière plastique réactifs (6A, 6B ; 6A', 6B'), comprenant les étapes :
d'alimentation dosée des composants de matière plastique réactifs (6A, 6B ; 6A', 6B') à l'état d'égouttage respectivement vers un dispositif de fusion (10A, 10B ; 10A', 10B') correspondant, dans lequel l'au moins un dispositif de fusion (10, 10A, 10B ; 10A', 10B' ; 10") présente un récipient (36 ; 36' ; 36") dans lequel le matériau de départ (6, 6A, 6B ; 6A', 6B' ; 7) fusible alimenté à l'état d'égouttage est fondu et peut être approvisionné à l'état fluidique, et dans lequel le récipient (36 ; 36' ; 36") présente en outre un premier tronçon d'approvisionnement (40 ; 40") pour approvisionner le matériau de départ (6, 6A, 6B ; 6A', 6B' ; 7) fusible à l'état d'égouttage et un deuxième tronçon d'approvisionnement (42 ; 42") pour approvisionner le matériau de départ (6, 6A, 6B ; 6A', 6B' ; 7) fondu à l'état liquide ;
de fusion des composants de matière plastique réactifs (6A, 6B ; 6A', 6B') dans le dispositif de fusion (10, 10A, 10B ; 10A', 10B') respectif ;
d'alimentation dosée du composant de matière plastique réactif (6A, 6B ; 6A', 6B') fondu respectif vers une chambre de mélange (24 ; 24'), et
de mélange des composants de matière plastique réactifs (6A, 6B ; 6A', 6B') fondus entre eux en un mélange réactif dans la chambre de mélange (24 ; 24') ;
**caractérisé par** :
une coordination des deux étapes d'alimentation entre elles de façon à ce que dans le dispositif de fusion (10A, 10B ; 10A', 10B') respectif, seule une quantité prédéterminée de composant de matière plastique réactif (6A, 6B ; 6A', 6B') fusible est fondue, laquelle correspond au besoin immédiat en ce composant de matière plastique (6A, 6B ; 6A', 6B'), dans lequel le récipient (36 ; 36' ; 36") présente en outre un tronçon de séparation (38 ; 38"), lequel tronçon de séparation (38 ; 38") est prévu entre le premier tronçon d'approvisionnement (40 ; 40") et le deuxième tronçon d'approvisionnement (42 ; 42") et retient le matériau (6, 6A, 6B ; 6A', 6B' ; 7) à l'état non fondu ou qui s'égoutte et le laisse passer à l'état fondu ou fluidique du premier tronçon d'approvisionnement (40 ; 40") au deuxième tronçon d'approvisionnement (42 ; 42").
